# EUROPÄISCHE PATENTSCHRIFT

(11) **EP 1 995 190 B1**
(45) Veröffentlichungstag und Bekanntmachung des Hinweises auf die Patenterteilung: **13.07.2011**
(21) Anmeldenummer: 08008977.4
(22) Anmeldetag: 15.05.2008
(51) Int. Cl.: B65G 35/06, B65G 35/08

(54) **Vorrichtung zum Transport von Behältnissen zu mindestens einer Bearbeitungsstation**
System for transporting containers to at least one processing station
Dispositif de transport de récipients pour au moins une station de traitement

(30) Priorität: 25.05.2007 DE 102007024446
(43) Veröffentlichungstag der Anmeldung: 26.11.2008
(73) Patentinhaber: GRONINGER & CO. GMBH, D-74564 Crailsheim (DE)
(72) Erfinder: Veile, Josef, 73463 Westhausen (DE); Miksch, Rupert, 74589 Satteldorf (DE)
(74) Vertreter: Kratzsch, Volkhard

(56) Entgegenhaltungen:
- EP-A- 0 679 136
- EP-A- 0 995 700
- EP-A- 1 495 997
- DE-A1- 10 020 607
- DE-U1- 20 010 791

## Beschreibung

Die Erfindung bezieht sich auf eine Vorrichtung zum Transport von Behältnissen zu mindestens einer Bearbeitungsstation, mit den Merkmalen im Oberbegriff des Anspruchs 1. Eine solche Vorrichtung is aus der EP 0 995 700 A1 bekannt.

Es ist ferner eine Vorrichtung bekannt (EP-A-1 495 997), die eine obere Führung und in vertikalem Abstand davon eine untere Führung nicht näher erläuterter Art aufweist, wobei an einem Ende eine Halbkreisgleitführung zur Umlenkung von Behältnisträgern vorgesehen ist. Die Behältnisträger verlaufen im Vorlauf im Bereich der oberen Führung und im Rücklauf auf dem Kopf liegend im Bereich der unteren Führung. Im Bereich der an einem Ende vorgesehenen Bogenführung laufen die Behältnisträger über eine Einführöffnung in die etwa schlitzförmige Halbkreisgleitführung ein und am Ende dieser über eine Auslassöffnung aus dieser heraus. Konstruktive Einzelheiten der oberen Führung für den Vorlauf und der unteren Führung für den vertikal darunter erfolgenden Rücklauf sind nicht offenbart. Es bleibt offen, wie die Behältnisträger im Vorlauf mit der oberen Führung und im Rücklauf mit der unteren Führung in Beziehung stehen. Die Behältnisträger bestehen aus Platten, die bei einem Ausführungsbeispiel unterseitig überstehende Vorsprünge aufweisen, die in Vertiefungen von Triebrädern zum Transport der Behältnisträger eingreifen. Bei einem Ausführungsbeispiel ist an einem Ende des Vorlaufs ein solches Triebrad vorgesehen, über das die Behältnisträger vom Vorlauf unter Umlenkung von etwa 180° zu dem darunter befindlichen Rücklauf transportiert werden. Die Beziehung zwischen den Behältnisträgern und der Vorlaufführung und Rücklaufführung ist konstruktiv ungelöst, weshalb davon auszugehen ist, dass die Behältnisträger nicht reproduzierbar sicher mit der Führung beim Vorlauf bzw. Rücklauf verbunden und dort präzise geführt sind.

Bei einer bekannten Vorrichtung (EP 0 679 136 A1) sind zwei parallele Führungsschienen für den Vorlauf und den Rücklauf der Behältnisträger vorgesehen, die in einer horizontalen Ebene angeordnet sind. Die Wechseleinrichtungen sind mit Schienenstücken versehen, die sich an die Führungsschienen anschließen und um eine senkrecht zur Förderrichtung der Behältnisträger verlaufende Achse drehbar sind. Eine derartige Gestaltung ist allein schon deswegen ungünstig, weil dadurch kein kontinuierlicher Transport der Behältnisse möglich ist, die daher nur schrittweise transportiert werden können. Ferner hat eine solche Vorrichtung Nachteile im Hinblick auf eine angestrebte leichte Demontierbarkeit mit Möglichkeit zur Reinigung und Sterilisation von Einzelbauteilen.

Aus der DE 100 20 607 A1 ist ferner eine Vorrichtung zum Transport einzelner Aufnahmen entlang einer geschlossen umlaufenden Führungsschiene bekannt, die sich innerhalb einer vertikalen Ebene erstreckt, einen oberen, dem Vorlauf dienenden geradlinigen Abschnitt und einen in Abstand unterhalb davon befindlichen geradlinigen Abschnitt für den Rücklauf aufweist, wobei beide Abschnitte an beiden Enden überhalb kreisförmig gekrümmte Übergangsbögen miteinander verbunden sind. Entlang dieser Führungsschiene laufen sieben Züge, die jeweils aus sechs in Reihe verbundenen Aufnahmen für jeweils ein Produkt bestehen. Jeder Zug ist längs der Führungsschiene verschieblich bzw. verfahrbar, wobei zwischen jedem Zug und seinem vorlaufenden Zug und dem entsprechend nachlaufenden Zug Relativbewegungen möglich sind. Jede Aufnahme weist unterseitig einen Vorsprung auf, der in eine Ausnehmung von dem Antrieb dienenden Triebrädern formschlüssig eingreifen kann. Die Züge werden absatzweise längs der Führungsschiene bewegt. Die Verbindung zwischen den einzelnen Aufnahmen und der Führungsschiene ist nicht gezeigt und damit konstruktiv nicht gelöst.

Bekannt sind ferner Vorrichtungen zum Transport von Behältnissen, bei denen umlaufende Endlosketten oder Endlosbänder vorgesehen sind, an denen einzelne Behältnisträger befestigt sind. Derartige umlaufende Ketten oder Bänder sind nicht nur aufwändig sondern auch insoweit nachteilig, als diese kaum eine Demontierbarkeit einzelner Bauelemente ermöglichen und Schwierigkeiten im Hinblick auf eine Reinigung bieten.

Der Erfindung liegt die Aufgabe zugrunde, eine Vorrichtung zum Transport von Behältnissen der eingangs genannten Art zu schaffen, die einfach im Aufbau ist, einen kontinuierlichen Transport der Behältnisse ermöglicht und die Voraussetzungen dafür schafft, dass die Behältnisträger sowie sonstige einzelne Bauteile der Vorrichtung schnell und einfach demontierbar sind zum Zwecke der Reinigung, Sterilisation, des Austauschs od. dgl..

Die Aufgabe ist bei einer Vorrichtung zum Transport von Behältnissen der eingangs genannten Art gemäß der Erfindung durch die Merkmale im Anspruch 1 gelöst. Weitere Erfindungsmerkmale und vorteilhafte Ausgestaltungen ergeben sich aus den Unteransprüchen. Die Vorrichtung ist einfach im Aufbau und ermöglicht einen kontinuierlichen Transport von Behältnissen jeglicher Art. Die Vorrichtung ermöglicht einen Laminarflow und eine gute Gasdurchdringung, was insbesondere bei einer Gassterilisation im eingebauten Zustand von besonderem Vorteil ist. Die einzelnen Behältnisträger sind leicht und einfach lösbar und gegen solche anderer Gestalt in Anpassung an unterschiedliche Behältnisse austauschbar. Einzelne Elemente der Vorrichtung lassen sich schnell und einfach demontieren zum Zwecke der Reinigung, Sterilisation od. dgl. Von Vorteil ist ferner, dass mittels der Vorrichtung am Ende der Linearführungen ein Bogenumlauf von einer Führung in die andere möglich ist, der trotz des Richtungswechsels schlag- und stoßfrei erfolgt. Dies wird in einfacher Weise durch die Bogenführungen erreicht, die sich an die Enden der beiden linearen Führungen anschließen und je nach Gestaltung entweder mit diesen verbunden oder von diesen separiert sein können. Die Linearführungen und/oder die Bogenführungen können Rollenführungen oder Gleitführungen sein.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische Draufsicht einer Vorrichtung zum Transport von Behältnissen, wobei der besseren Übersicht wegen lediglich ein Behältnisträger dargestellt ist,
- Fig. 2: eine schematische perspektivische und teilweise geschnittene Ansicht des in Fig. 1 linken Endbereichs der Vorrichtung in Fig. 1 in demgegenüber größerem Maßstab,
- Fig. 3: eine schematische perspektivische Explosionsdarstellung eines Behältnisträgers,
- Fig. 4: eine schematische Draufsicht des in Fig. 1 linken Endbereichs der Vorrichtung, in Fig. 1 von oben betrachtet mit gestrichelt angedeuteter oberer Führung,
- Fig. 5: eine Ansicht etwa entsprechend derjenigen in Fig. 4 der unteren Führung,
- Fig. 6: eine perspektivische Ansicht eines Teils des in Fig. 4 linken Endes der unteren Führung mit einem Behältnisträger,
- Fig. 7: eine schematische, perspektivische Ansicht des in Fig. 1 linken Endes der oberen Führung mit einem Behältnisträger,
- Fig. 8: einen schematischen Schnitt entlang der Linie VIII-VIII in Fig. 6,
- Fig. 9: eine schematische perspektivische Unteransicht der oberen Führung im Bogenbereich,
- Fig. 10: eine schematische perspektivische Ansicht der unteren Führung im Bogenbereich,
- Fig. 11: eine schematische perspektivische und teilweise geschnittene Ansicht der oberen und unteren Führung mit einem Behältnisträger im Bogenbereich.

In den Zeichnungen ist eine Vorrichtung 10 gezeigt, die zum Transport von nicht weiter gezeigten Behältnissen nahezu beliebiger Art ausgebildet ist. Als Behältnisse kommen z. B. Spritzen, Ampullen, Vials, Fläschchen für Medikamente od. dgl. in Betracht, die herausfallsicher in Behältnisträgern 11 aufgenommen sind, wobei die Behältnisträger 11 zur Anpassung an Behältnisse unterschiedlicher Art gegen andere Behältnisträger schnell und einfach austauschbar sind. Die Behältnisträger 11 gemäß dem gezeigten Ausführungsbeispiel weisen eine Vorderseite 12 und im Bereich dieser oben längs einer z. B. linearen Reihe platzierte, zur jeweils gleichen Seite offene Ausnehmungen 13 auf, die in gleich großen Abständen aufeinanderfolgen und zur Aufnahme entsprechender Bereiche von Behältnissen, an die die Ausnehmungen 13 angepasst sind, ausgebildet sind. Je nach Anwendungsfall und Gestaltung der Behältnisse können die Ausnehmungen 13 zum Klemmend-, Stehend- oder Hängendtransport der Behältnisse dienen, die gegen Herausfallen aus den Ausnehmungen 13 in geeigneter Weise bei Bedarf geschützt sind.

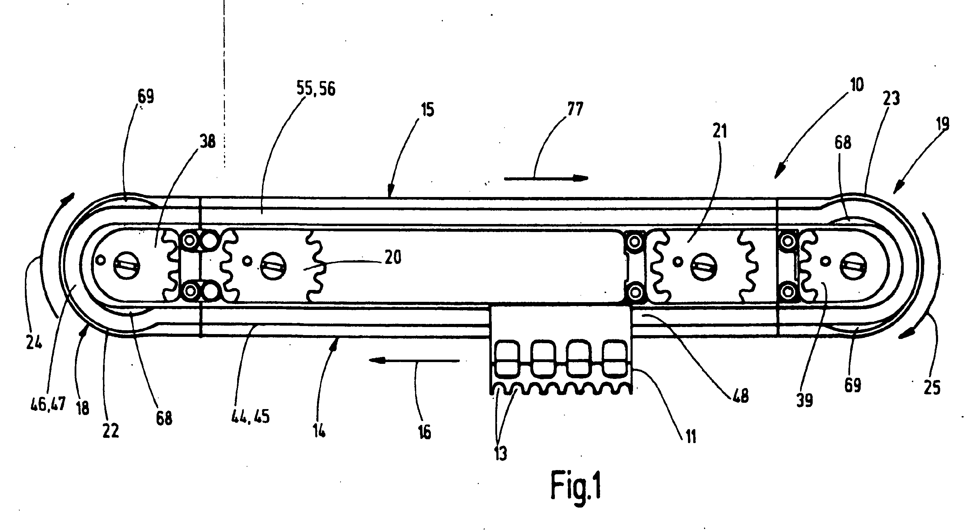

Die Vorrichtung 10 ist zum kontinuierlichen und, in abgewandelter Form, bedarfsweise auch zum getakteten Transport der in einzelnen Behältnisträgern 11 befindlichen Behältnisse zu nicht weiter gezeigten Bearbeitungsstationen , insbesondere Füll- und/oder Verschließstationen, ausgebildet und weist zwei parallele, in Querrichtung mit Abstand voneinander verlaufende Führungen 14,15 auf, die dem geführten Vorlauf gemäß Pfeil 16 und Rücklauf gemäß Pfeil 17 dienen. An beiden Enden, in Fig. 1 links und rechts, weisen die Führungen 14, 15 Wechseleinrichtungen 18 bzw. 19 auf, von denen die in Fig. 1 linke Wechseleinrichtung dem Wechsel der Behältnisträger 11 von der Führung 14 in die andere Führung 15 dient und die in Fig. 1 rechte andere Wechseleinrichtung 19 in umgekehrter Weise dem Wechsel der Behältnisträger 11 von der Führung 15 in die Führung 14 dient. Zum Transport der Behältnisträger 11 dienen z. B. zwischen den Führungen 14 und 15 angeordnete und an den Behältnisträgern 11 angreifende Triebräder 20, 21, die z. B. als Zahnräder ausgebildet sind und mit den Behältnisträgern 11 für den Transport in Eingriff gelangen.

Die Führungen 14 und 15 sowie die endseitigen Wechseleinrichtungen 18, 19 erstrecken sich im Wesentlichen innerhalb einer gemeinsamen horizontalen Ebene, wobei die Behältnisträger 11 beim Transport etwa vertikal dazu ausgerichtet sind.

Die beiden Wechseleinrichtungen 18, 19 weisen jeweils Bogenführungen 22 bzw. 23 auf, die sich an die Enden der Führungen 14, 15 anschließen und damit z. B. lösbar verbunden sind und im Bogen gemäß den Pfeilen 24, 25 von einer Führung 14 zur anderen Führung 15 bzw. zurück überleiten.

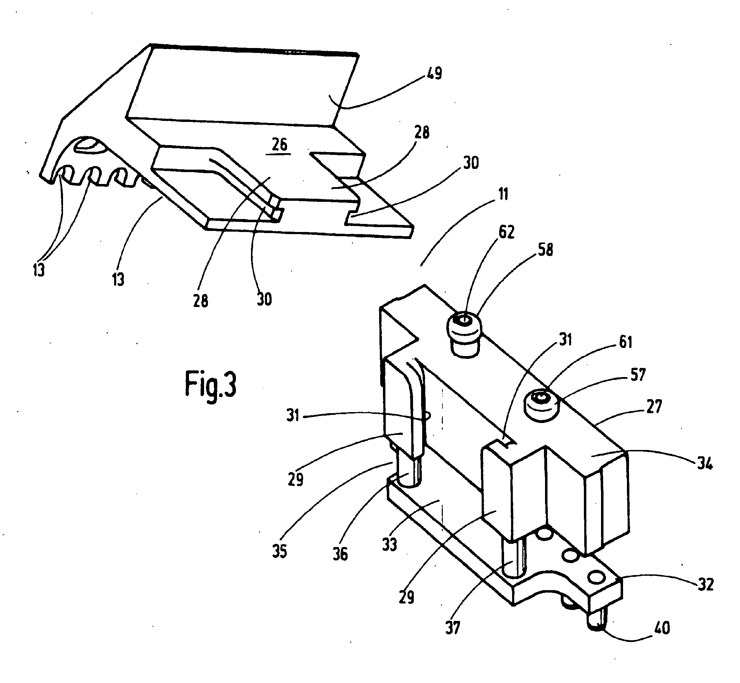

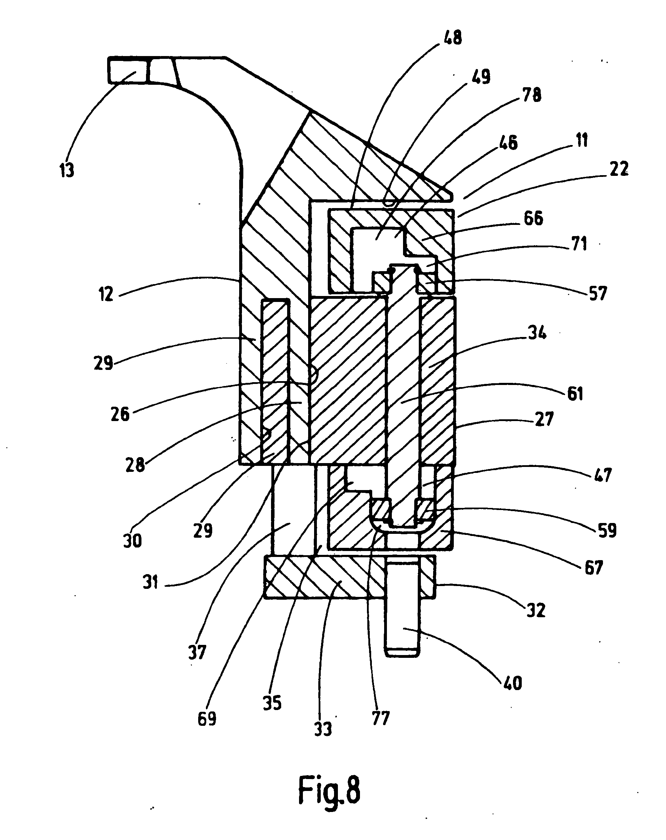

Die einzelnen Behältnisträger 11 weisen auf der zur Führung 14, 15 hin weisenden Rückseite 26 Tragelemente 27 auf, an denen sie lösbar gehalten sind. Hierzu dienen rückseitige Verbindungsmittel zwischen den Tragelementen 27 und den Behältnisträgern 11, die zu einer lösbaren Verbindung zusammenwirken können und z. B. aus Leisten 28, 29 und Nuten 30, 31 zum Einschieben und Aufnahmen der Leisten 28, 29 gebildet sind, wie insbesondere aus Fig. 3 und Fig. 8 ersichtlich ist. Auf diese Weise ist zwischen jedem Behältnisträger 11 und Tragelement 27 eine in vertikaler Richtung wirkende Schiebeverbindung geschaffen, die bei Bedarf ein schnelles Ablösen des Behältnisträgers 11 von dessen Tragelement 27 zum Zwecke der Reinigung, Sterilisierung, des Austauschs od. dgl. möglich macht. Jedes Tragelement 27 weist ferner einen unteren Teil 32 in Form einer Platte 33 auf, die in Abstand unterhalb des oberen Elementteils 34 des Tragelements 27 unter Belassung eines Zwischenraumes 35 zwischen diesen gehalten ist. Die Platte 33 ist mit dem oberen Elementteil 34 mittels mindestens einer Säule, beim gezeigten Ausführungsbeispiel mittels zwei beabstandeten Säulen 36, 37, fest verbunden.

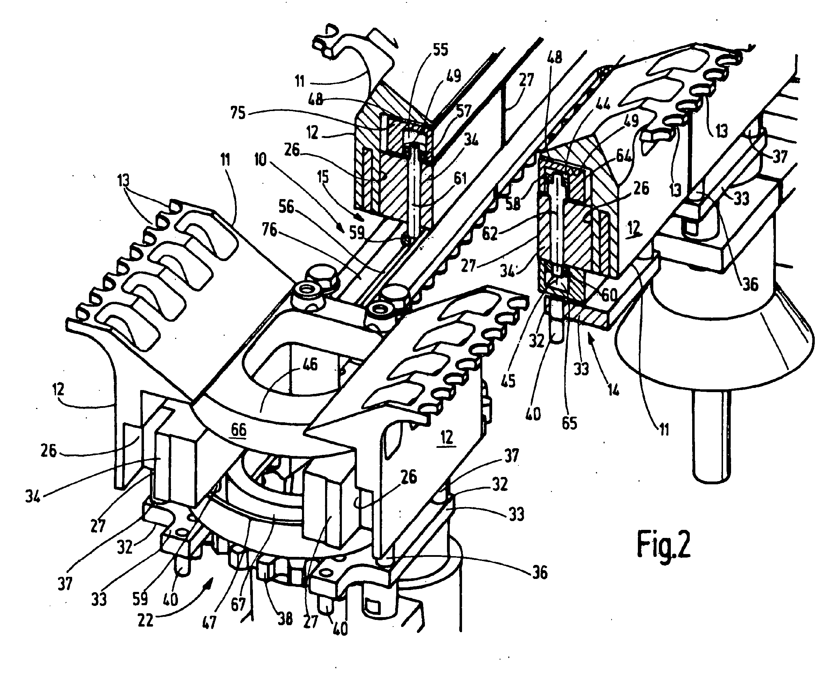

Wie sich insbesondere aus Fig. 2 ergibt, weist jede Führung 14, 15 eine obere Führungsbahn 44 bzw. 55 und in vertikalem Abstand unterhalb dieser eine untere Führungsbahn 45 bzw. 56 auf, die zur zugeordneten oberen Führungsbahn 44 bzw. 55 parallel verläuft. Die Behältnisträger 11 sind mittels der Tragelemente 27 jeweils zwischen der oberen Führungsbahn 44 und der unteren Führungsbahn 45 der Führung 14 bzw. zwischen der oberen Führungsbahn 55 und der unteren Führungsbahn 56 der Führung 15 gehalten und beim Transport geführt.

An die Enden der beiden oberen Führungsbahnen 44 und 55 schließt sich eine obere Bogenbahn 46 an. An die Enden der beiden unteren Führungsbahnen 45, 56 schließt sich eine untere Bogenbahn 47 an. Beide Bogenbahnen 46, 47 erstrecken sich jeweils etwa über 180° Umfangswinkel und sind zur 180°-Bogenführung eines an der oberen Führungsbahn 44, 55 und an der unteren Führungsbahn 45, 56 angreifenden Teils eines jeweiligen Tragelementes 27 ausgebildet. In gleicher Weise ist auch die in Fig. 1 rechts dargestellte Bogenführung 23 gestaltet.

Die obere Bogenbahn 46 und/oder die obere Führungsbahn 44, 55 kann eine oberseitige, etwa horizontale Stützfläche 48 aufweisen, auf der die Behältnisträger 11 in vertikaler Richtung abstützbar sind. Statt dessen können die Behältnisträger 11 auch mit vertikalem Abstand von dieser Stützfläche 48 verlaufen, wie nur beispielshalber in Fig. 8 gezeigt ist. Soll die Stützfläche 48 zur vertikalen Abstützung dienen, besteht kein Zwischenraum zwischen der Unterseite 49 des Behältnisträgers 11 und der Stützfläche 48.

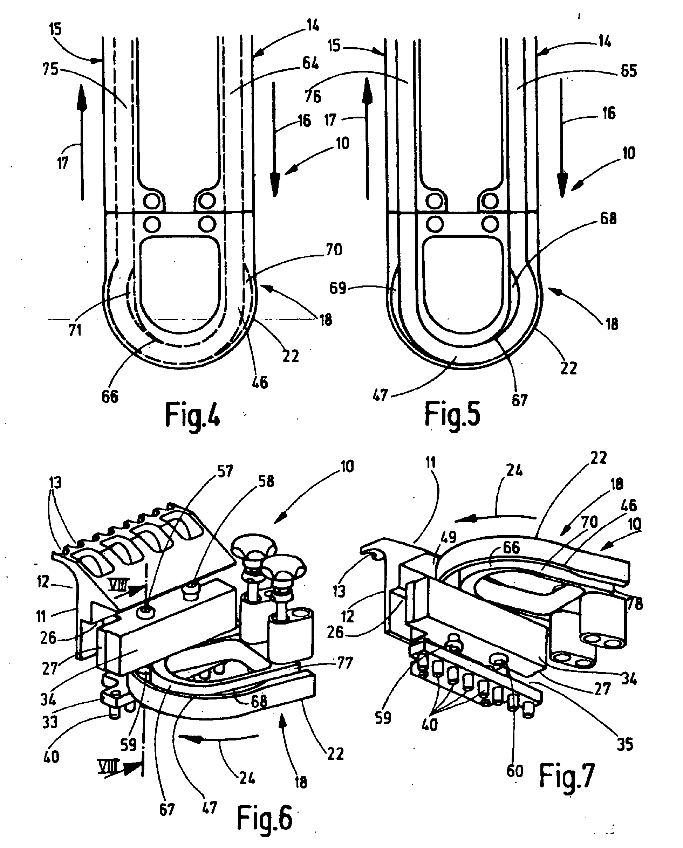

Wie insbesondere aus Fig. 6 und 7 sowie Fig. 9 und 10 ersichtlich ist, ist die obere Bogenbahn 46 und die untere Bogenbahn 47 zumindest annähernd kreisabschnittförmig ausgebildet. Die Kreismitten der oberen Bogenbahn 46 und der unteren Bogenbahn 47 können dabei vertikal z. B. etwa in einer Flucht verlaufen.

Entsprechend Fig. 1 ist auch im Bereich jeder endseitigen Bogenführung 22, 23 jeweils ein Triebrad 38, 39 angeordnet, wobei die Drehachse des Triebrades 38, 39 zumindest annähernd mit den Kreismitten der oberen Bogenbahn 46 und unteren Bogenbahn 47 vertikal fluchten kann. Die Anordnung der Führungen 14, 15 einerseits und der Triebräder 20, 21 sowie 38, 39 andererseits kann so getroffen sein, dass jedes Triebrad mit einem Segment z. B. in die Führung 14 des Vorlaufs und mit einem anderen, z. B. etwa diametral gegenüberliegenden Segment in die Führung 15 des Rücklaufs eingreift, wobei hinsichtlich der Triebräder 38, 39 Entsprechendes auch im Bereich der oberen Bogenbahn 46 und unteren Bogenbahn 47 erfolgen kann.

Beim gezeigten Ausführungsbeispiel sind die Triebräder 20, 21 unterhalb der unteren Führungsbahnen 45, 56 und unterhalb der an diese anschließenden unteren Bogenbahn 47 angeordnet, wobei die Triebräder 20, 21 sowie 38, 39 jeweils in den Bereich unterhalb der Platte 33 des Tragelements 27 greifen. Bei einem anderen, nicht gezeigten Ausführungsbeispiel sind die Triebräder 20, 21 sowie 38, 39 zwischen der oberen Führungsbahn 44, 55 und der unteren Führungsbahn 45, 56 sowie im Bereich der Bogenführungen 22, 23 zwischen der oberen Bogenbahn 46 und der unteren Bogenbahn 47 angeordnet. Bei einem anderen, nicht gezeigten Ausführungsbeispiel sind statt dessen die Triebräder 20, 21 sowie 38, 39 oberhalb der oberen Führungsbahn 44, 55 und der oberen Bogenbahn 46 angeordnet, was ebenfalls in vorteilhafter Weise möglich ist.

Zur Bildung der Führungen 14, 15 und der Bogenführungen 22, 23 sind die verschiedensten Führungssysteme geeignet, die allesamt im Rahmen der Erfindung liegen. So kann beispielsweise eine Führungsschiene vorgesehen sein, die im Bereich der Führungen 14, 15 sowohl die obere Führungsbahn 44, 55 als auch die untere Führungsbahn 45, 56 trägt. Es kann sich hierbei z. B. um eine im Querschnitt vieleckige, z. B. viereckige oder rechteckige, Führungsschiene handeln, die hochkant ausgerichtet ist und am oberen Rand innere und/oder äußere Bahnen zur Bildung der oberen Führungsbahn 44, 55 aufweist und am unteren Randbereich entsprechende innere und/oder äußere Bahnen zur Bildung der unteren Führungsbahn 45, 56 aufweist. Statt einer einzigen Führungsschiene dieser Art können auch eine obere Führungsschiene 64, 75, die die oberen Führungsbahnen 44, 55 trägt, und eine untere Führungsschiene 65, 76 vorgesehen sein, die die unteren Führungsbahnen 45, 56 trägt, wobei auch hier diese Führungsbahnen innerhalb und/oder außerhalb dieser oberen und unteren Führungsschienen 64, 65, 75, 76 vorgesehen sein können. In entsprechender Anpassung daran sind die Bogenführungen 22, 23 gestaltet. Ist eine Führungsschiene vorgesehen, so trägt diese sowohl die obere Bogenbahn 46 als auch die untere Bogenbahn 47, die außerhalb oder innerhalb dieser Bogenschiene vorgesehen sein kann. Sind statt dessen zwei Führungsschienen vorgesehen, so sind auch im Bereich der Bogenführung 22, 23 jeweils eine obere Bogenschiene 66 und eine untere Bogenschiene 67 angeordnet, von denen die obere Bogenschiene 66 die obere Bogenbahn 46 und die untere Bogenschiene 67 die untere Bogenbahn 47 auf der Außenseite und/oder Innenseite tragen. Es versteht sich, dass die obere Führungsbahn 44, 55 jeweils auch mittels zweier zueinander parallel verlaufender Führungsschienen verwirklicht werden kann, ebenfalls die untere Führungsbahn 45, 56 sowie die obere Bogenbahn 46 und untere Bogenbahn 47. Die beschriebenen Führungsschienen bzw. Bogenschienen können im Querschnitt nicht nur vieleckig, z. B. viereckig, sein sondern statt dessen auch gekrümmt sein, z. B. kreisförmig, oval od. dgl. Die jeweiligen Führungsschienen und/oder Bogenschienen weisen dabei äußere und/oder innere Führungsbahnen zur Verwirklichung der Führungsbahnen 44, 55 bzw. 45, 56 bzw. 46, 47 auf.

In Zuordnung zu den Führungsbahnen 44, 55 sowie 45, 56 und 46, 47 weisen die Tragelemente 27 oberseitige Führungselemente 57, 58 und unterseitige Führungselemente 59, 60 auf, die z. B. als Gleitkörper, z. B. Gleitstifte, ausgebildet sein können, oder, wie dargestellt ist, als Rollkörper, insbesondere als Rollen, ausgebildet sind. Die Führungselemente 57 bis 60 weisen Bolzen 61, 62, z. B. Lagerachsen oder Wellen, auf, die das jeweilige Tragelement 27 in vertikaler Richtung durchsetzen und oberseitig bzw. unterseitig dieses überstehen können. Dabei ist die Anordnung insbesondere so getroffen, dass jedes Tragelement 27 zwei oberseitige Führungselemente 57, 58 und zwei unterseitige Führungselemente 59, 60 aufweist, die je Seite in Längsabstand voneinander angeordnet sind, wobei die beiden oberseitigen Führungselemente 57, 58 an den oberen Führungsbahnen 44, 55 und der oberen Bogenbahn 46 und die unterseitigen Führungselemente 59, 60 an der unteren Führungsbahn 45, 56 und der unteren Bogenbahn 47 angreifen und jeweils entlang diesen geführt sind, wobei die Führung auch im Bereich der Bogenführung 22, 23 geschieht, und zwar ohne etwaigen abrupten Richtungswechsel und somit stoßfrei. Der Verlauf insbesondere der oberen Bogenbahn 46 und unteren Bogenbahn 47 sowie deren Anschluss an die Führungsbahnen 44, 55 sowie 45, 56 ist so gestaltet, dass die Behältnissträger 11 schlagfrei umgelenkt werden.

Bei dem Ausführungsbeispiel, bei dem die obere Führungsbahn 44, 55 und die untere Führungsbahn 45, 56 durch eine einzige Führungsschiene oder durch eine obere Führungsschiene 64 bzw. untere Führungsschiene 65 gebildet sind, können die Führungselemente 57 bis 60 in Form von Rollen z. B. an zwei einander gegenüberliegenden Außenflächen der Führungsschienen und/oder Bogenschienen geführt sein. Bei besonderer Gestaltung der Führungselemente 57 bis 60 in Form von Rollen können diese auch die Aufgabe der vertikalen Abstützung der Behältnisträger 11 übernehmen und zu dieser vertikalen Abstützung ausgebildet sein. Dies gilt auch für ein solches Ausführungsbeispiel, bei dem die obere Führungsbahn 44, 55 und/oder die untere Führungsbahn 45, 56 jeweils an zwei etwa parallel zueinander verlaufenden Längsschienen ausgebildet sind, entweder auf deren Außenseite oder auf deren Innenseite. Gleiches ist auch für die Gestaltung der Bogenführung 22, 23 möglich, wobei dann die obere Bogenbahn 46 und/oder die untere Bogenbahn 47 jeweils an zwei etwa parallel zueinander verlaufenden Bogenschienen ausgebildet sind, innenseitig oder außenseitig dieser oder auch zwischen diesen. Bei dieser Gestaltung weisen die jeweiligen Führungsschienen und/oder Bogenschienen äußere und/oder innere Führungsbahnen für die Führungselemente 57 bis 60 auf.

Beim gezeigten Ausführungsbeispiel ist zur Verwirklichung der Führungsbahnen 44, 55 sowie 45, 56 und der Bogenbahnen 46, 47 zur Vereinfachung der Darstellung jeweils eine Führungsschiene mit U-Profil gezeigt. So ist die obere Führungsbahn 44 und 55 jeweils an einer oberen Führungsschiene 64 bzw. 75 vorgesehen, die jeweils U-Profil aufweisen. In gleicher Weise ist die jeweilige untere Führungsbahn 45, 56 mittels jeweiliger unterer Führungsschienen 65 bzw. 76 verwirklicht, die ebenfalls U-Profil aufweisen mit einander zugewandten Öffnungen des U. In gleicher Weise ist die obere Bogenbahn 46 an einer oberen Bogenschiene 66 und die untere Bogenbahn 47 an einer unteren Bogenschiene 67 vorgesehen, wobei auch diese Bogenschienen 66, 67 ein U-Profil aufweisen, das sich in Transportrichtung der Behältnisträger 11 an das jeweilige U-Profil der längs verlaufenden Führungsschienen 64, 75 sowie 65, 76 anschließt. Wie insbesondere aus Fig. 1 sowie Fig. 4 und 5 ersichtlich ist, sind die Bogenführungen 22, 23 an separaten Bauelementen ausgebildet, die auswechselbar an die längsgerichteten Führungen 14, 15 angesetzt und mit diesen verbunden sind. Diese Bogenführungs-Bauelemente lassen sich mittels entsprechender Befestigungsmittel schnell und einfach montieren bzw. demontieren. Als Befestigungsmittel sind nur beispielshalber von Hand gut erfassbare Griffschrauben od. dgl. angedeutet.

Die längs verlaufenden oberen Führungsschienen 64, 75 sowie unteren Führungsschienen 65, 76 weisen ein solches U-Profil auf, dessen Breite und dessen Tiefe über den Längsverlauf gleichbleibend ist. Die obere Bogenschiene 66 und die untere Bogenschiene 67 sind in Bezug zueinander derart um 180° gewendet, dass die U-Profile beider Bogenschienen 66, 67 mit ihrer U-Offnung einander zugewandt sind, wie dies auch bei den längsgerichteten Führungsschienen 64, 75 und 65, 76 der Fall ist. Jedoch sind die Bogenführungen 22, 23 im Bereich des Einlaufs und des Auslaufs mit die Breite des U vergrößernden Ausweichbahnen versehen, die ein stoßfreies Umlenken der einzelnen Behältnisträger 11 im Bereich der Bogenführungen 22, 23 ermöglichen. Wenn die Tragelemente 27 die Bogenführung 22,23 durchlaufen, ergibt sich für die Tragelemente 27 und damit deren Führungselemente 57 bis 60 eine Schrägstellung. Trotz dieser Schrägstellung ist eine ruckfreie Rollbewegung der Tragelemente 27 mittels der Führungselemente 57 bis 60 entlang der jeweiligen Bogenführung 22, 23 möglich.

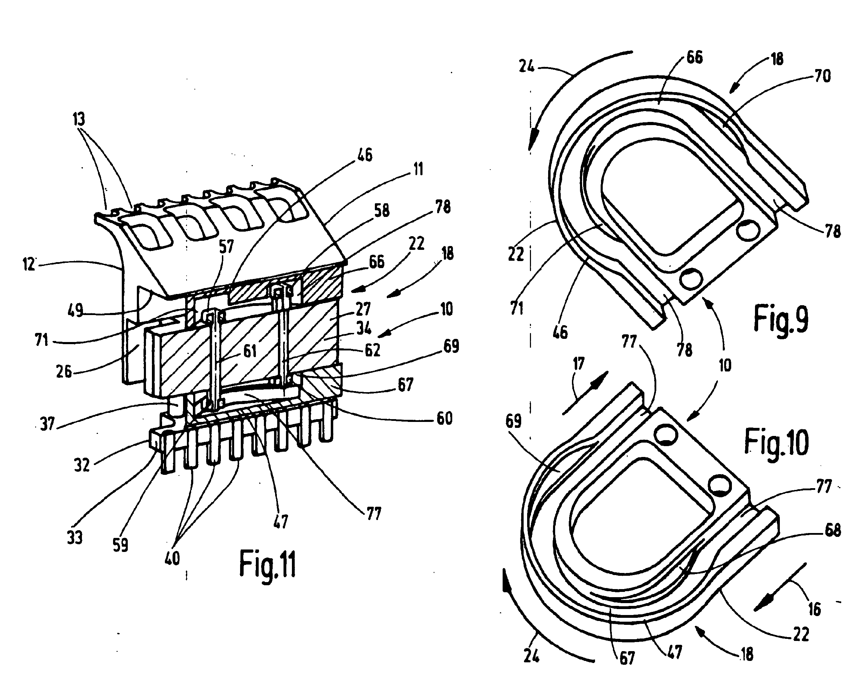

Im Einzelnen ist bei der unteren Bogenschiene 67 eine innere Ausweichbahn 68 beim Einlauf in die Bogenbahn 47 und eine äußere untere Ausweichbahn 69 beim Auslauf aus der unteren Bogenbahn 47 vorgesehen. Bei der oberen Bogenschiene 66 sind die Verhältnisse derart vertauscht, dass eine obere äußere Ausweichbahn 70 beim Einlauf und eine obere innere Ausweichbahn 71 beim Auslauf vorgesehen ist. Aufgrund dieser Ausweichbahnen 68 bis 71 ergeben sich im Bereich beider Bogenführungen 22, 23 beim Einlauf bzw. beim Auslauf Verbreiterungen des U-Profils und auch unterschiedliche Profiltiefen. Die untere Bogenbahn 47 weist eine hinsichtlich der Profiltiefe zuunterst verlaufende Führungsbahn 77 etwa gleichbleibender Profilbreite und oberhalb dieser auf der Innenseite sowie auf einer dazu etwa diametralen Außenseite jeweils die untere Ausweichbahn 68, 69 auf (Fig. 10), von denen die innere Ausweichbahn 68 nach innen und die andere Ausweichbahn 69 nach außen weg gerichtet ist. Die Ausweichbahnen 68, 69 haben eine geringere Tiefe als die zuunterst laufende Führungsbahn 77.

In gleicher Weise ist die obere Bogenbahn 46 gestaltet. Sie weist eine hinsichtlich der Profiltiefe zuoberst verlaufende Führungsbahn 78 etwa gleichbleibender Profilbreite auf und unterhalb dieser auf einer Außenseite sowie einer dazu etwa diametralen Innenseite die oberen Ausweichbahnen 70, 71, von denen die eine Ausweichbahn 70 quer zur Führungsbahn 78 nach außen und die andere Ausweichbahn 71 nach innen weg gerichtet ist. Betrachtet man die untere Führungsbahn 77, erkennt man, dass die weniger tiefen Ausweichbahnen 68, 69 beim Einlauf und beim Auslauf in die untere Bogenbahn 46 in die Führungsbahn 77 auslaufen. In gleicher Weise laufen bei der oberen Bogenbahn 46 die Ausweichbahnen 70, 71 in die Führungsbahn 78 aus.

In Anpassung an diese Gestaltung der Führungsbahnen 77, 78 mit Ausweichbahnen 68 bis 71 ist die Anordnung der Führungselemente 57 bis 60 je Tragelement 27 so getroffen, dass ein oberseitiges Führungselement 58 weiter nach oben übersteht als das andere oberseitige Führungselement 57 und das zugeordnete unterseitige Führungselement 60 weniger weit nach unten übersteht als das andere unterseitige Führungselement 59. Die beiden weiter überstehenden Führungselemente 58, 59 sind beim Umlauf der Tragelemente 27 in den oberen Führungsschienen 64, 75 sowie unteren Führungsschienen 65, 76 der längsverlaufenden Führungen 14, 15 geführt und laufen im Bereich der Bogenführungen 22, 23 in die tieferliegende Führungsbahn 77, 78 ein und laufen entlang dieser unter Bewirkung der Zwangsführung der Tragelemente 27 entlang der jeweiligen Bogenführung 22, 23. Die jeweiligen Ausweichbahnen 68 bis 71 sind für diejenigen Führungselemente 57, 60 vorgesehen, die weniger weit über das Tragelement 27 überstehen und bei der Umlenkung des jeweiligen Tragelementes 27 im Bereich der Bogenführung 22, 23 eine andere Bahn als die weiter überstehenden Führungselemente 58, 59 beschreiben. Diese Bahn liegt im Bereich der unteren Bogenbahn 47 höher, wie die weniger tiefen Ausweichbahnen 68, 69 erkennen lassen. Im Bereich der oberen Bogenbahn 46 sind die Verhältnisse ebenso. Man erkennt, dass beim Umlauf der Tragelemente 27 die weiter überstehenden Führungselemente 58, 59 zwangshalber in den Führungsbahnen 77, 78 laufen, wodurch die Bogenführung vorgegeben ist. Der andere Bereich mit den weniger weit überstehenden Führungselementen 57, 60 beschreibt bei der Umlenkung einen Wegverlauf, der der Abwicklung der Umlenkung entspricht. Damit sich die Führungsbahnen 77, 78 nicht mit den Bahnen dieser Abwicklung der Umlenkung schneiden, liegt die untere Führungsbahn 77 tiefer als die breitere, durch die unteren Ausweichbahnen 68, 69 vorgegebene Ausgleichsbahn. Analog sind die Verhältnisse im Bereich der oberen Bogenbahn 46. Hier liegt die obere Führungsbahn 78 tiefer als der hinsichtlich der Profilbreite größere Bereich der Ausweichbahnen 70, 71 geringerer Tiefe. Somit ergibt sich beim Umlauf der einzelnen Tragelemente 27, dass beim Durchlaufen der Bogenbahn 46, 47 ein unterseitiges Führungselement 59 im Bereich der unteren Bogenbahn 47 entlang deren zuunterst verlaufender Führungsbahn 77 und das andere unterseitige Führungselement 60 entlang der Führungsbahn 77 und beim Einlauf und beim Auslauf entlang den unteren Ausweichbahnen 68, 69 geführt ist. In analoger Weise ist ein oberseitiges Führungselement 58 beim Durchlaufen der oberen Bogenbahn 46 entlang deren zuoberst verlaufender Führungsbahn 78 und das andere oberseitige Führungselement 57 entlang der Führungsbahn 78 und im Bereich des Einlaufs und des Auslaufs der oberen Ausweichbahnen 70, 71 geführt.

Zum Antrieb der einzelnen Tragelemente 27 längs den Führungen 14, 15 und den Bogenführungen 22, 23 weisen die Behältnisträger 11, insbesondere deren Tragelemente 27, in Längsrichtung in gleich großen Abständen folgende Mitnehmer 40, z. B. in Form von Zylinderstiften, auf, mit denen die Triebräder 20, 21 sowie 38, 39 in Eingriff gelangen. Statt dieser Mitnehmer 40, die eine Triebstockverzahnung bilden, können auch andere, gleichermaßen wirkende Elemente an den einzelnen Behältnisträgern 11 vorgesehen sein, wenn die Voraussetzung dafür erfüllt ist, dass diese mit den Triebrädern 20, 21 sowie 38, 39 in Eingriff gelangen können.

Die Vorrichtung 10 hat vielfältige Vorteile. Sie ist einfach im Aufbau und aufgrund der Elementbauweise schnell und einfach montierbar und demontierbar. Sie ermöglicht einen kontinuierlichen Transport von Behältnissen vielfältiger Art. Zur Anpassung an unterschiedliche Behältnisse können die Behältnisträger 11 eine separate obere Kopfleiste aufweisen, in der die Ausnehmungen 13 vorgesehen sind, wobei eine solche Kopfleiste zur Anpassung an unterschiedliche Behältnisse schnell und einfach ausgewechselt werden kann. Der Antrieb zum Transport der Behältnisträger 11 mittels Triebrädern 20, 21 sowie 38, 39 und Mitnehmern 40 ermöglicht eine gute Zugänglichkeit und vor allem eine gute, schnelle und einfache Reinigung. Die Behältnisträger 11 sind leicht lösbar und auswechselbar. Die Tragelemente 27 lassen sich schnell und einfach aus den Führungen 14, 15 und Bogenführungen 22, 23 entnehmen zum Zwecke der Reinigung, Sterilisation od. dgl. Dies kann z. B. durch schnelle und einfache Demontage einzelner Elemente der Führungen oder auch der Wechseleinrichtungen 18, 19 geschehen. Sind die Triebräder 20, 21 sowie 38, 39 in beschriebener Weise unterhalb der unteren Führungsbahnen 45, 56 und unteren Bogenbahn 47 angeordnet, hat dies den Vorteil, dass eine leichte Demontage einzelner Bauelemente in einfacher Weise möglich ist und diese Bauelemente an anderer Stelle zerlegt, gereinigt oder in sonstige Weise behandelt werden können. Auch die bei der Vorrichtung 10 verbliebenen Restbauelemente sind sehr gut zugänglich und z. B. leicht zu reinigen.

Bei einem weiteren, nicht gezeigten Ausführungsbeispiel sind die endseitigen Bogenführungen 22, 23 nicht mit den beidseitigen Führungen 14, 15 verbunden, sondern statt dessen von diesen separiert. Als obere Führungsschiene 64 und 75 ist jeweils eine Führungsstange z. B. mit Rundquerschnitt oder Vieleckquerschnitt vorgesehen. Gleiches ist hinsichtlich der unteren Führungsschiene 65, 76 der Fall. Während die jeweilige obere Führungsschiene 64, 75 z. B. einen Kreisquerschnitt aufweist, kann die in Abstand davon unterhalb verlaufende untere Führungsschiene 65, 76 einen Viereckquerschnitt, z. B. Rechteckquerschnitt, aufweisen. Auf diesen so gestalteten oberen Führungsschienen 64, 75 und unteren Führungsschienen 65, 76 sind die Tragelemente 27 in vertikaler Richtung gestützt und in Linearrichtung gleitend geführt. Hierzu weisen die Tragelemente 27 angepasste, nutförmige Längsrinnen auf, in die diese oberen Führungsschienen 64, 75 und unteren Führungsschienen 65, 76 eingreifen. Die nutförmige Rinne für die obere Führungsschiene 64, 75 ist im Querschnitt z. B. etwa halbkreisförmig oder hat einen Querschnitt mit größerem Kreisverlauf größer als 180°, wobei in der jeweiligen Rinne einzelne oder durchgehende Gleitbuchsen enthalten sein können. Die den unteren Führungsschienen 65, 76 zugeordneten Rinnen können im Querschnitt einem nach unten offenen U entsprechen, mit dem der untere Teil 33 der Tragelemente 27 auf den im Querschnitt rechteckförmigen Führungsschienen 65, 76 aufsitzen kann, wobei auch hier in diese unteren Rinnen durchgehende oder in Längsrichtung beabstandete einzelne Gleiteinsätze für eine Gleitführung eingesetzt sein können.

Die mit den Triebrädern 20, 21, insbesondere Zahnrädern, in Eingriff stehenden Mitnehmer 40 sind nicht aus Bolzen oder Zylinderstiften gebildet sondern bestehen aus einer Zahnreihe mit Evolventenverzahung, in deren Zahnlücken die Zähne der Triebräder 20, 21 für den Transport in Linearrichtung eingreifen. Dabei liegen die Tragelemente 27 aneinander an, wobei diese durch diese Anlage in Linearrichtung verschoben werden.

Die oberseitigen und unterseitigen Führungselemente 57 bis 60 sind im Bereich der linearen Führungen 14, 15 außer Funktion und nur bei der endseitigen Umlenkung im Bereich der endseitigen Wechseleinrichtungen 18, 19 in Aktion. Im Bereich der Wechseleinrichtungen 18, 19 geht die lineare Gleitführung der Tragelemente 27 über in eine Rollenführung mittels der oberseitigen und unterseitigen Führungselemente 57 bis 60 in Form von Rollkörpern und entsprechenden Nuten, in denen letztere bei der Umlenkung um etwa 180° oben und unten laufen. Der Transport der Tragelemente 27 im Bereich der endseitigen Wechseleinrichtungen 18, 19 erfolgt bei diesem abgewandelten Ausführungsbeispiel durch Triebräder 38, 39 in Form einer oberen und einer unteren Zahnscheibe. Diese Zahnscheiben sind am Umfang mit Ausnehmungen versehen, z. B. mit insgesamt vier in Umfangsrichtung folgenden Ausnehmungen, in denen die jeweiligen Führungselemente 57 bis 60 oben und unten im Bereich der Wechseleinrichtungen 18, 19 und der Umlenkung aufgenommen werden. Aufgrund der Drehung dieser Zahnscheiben erfolgt der Umlenkungstransport der Tragelemente 27, wobei die obere Zahnscheibe mit den oberseitigen Führungselementen 57, 58 und die untere Zahnscheibe mit den unterseitigen Führungselementen 59, 60 in Eingriff gelangt. Die unterseitigen Führungselemente 59, 60 befinden sich unterhalb der jeweils als Zahnleiste ausgebildeten Mitnehmer 40 der Tragelemente 27 und stehen unterseitig über diese über. Die beiden Zahnscheiben sind drehfest auf einer gemeinsamen Welle. Damit im Bereich der Umlenkung die Reibung verringert wird, befindet sich in Axialrichtung dieser Welle betrachtet zwischen der oberen Zahnscheibe und der unteren Zahnscheibe eine etwa mittig angeordnete glatte Scheibe, die horizontal verläuft und mit ihrem Rand in den Zwischenraum 35 des jeweiligen Tragelements 27 eingreift. Die Bogenführung 22, 23 der jeweiligen Wechseleinrichtung 18, 19 verläuft entlang einer Kreisbahn mit z. B. etwa 180° Umfangswinkel. Dadurch ist die Kontur der endseitigen Umlenkung im Vergleich zum ersten Ausführungsbeispiel wesentlich einfacher gestaltet. Die einzelnen entlang dieser Bogenführung 22, 23 geführten Tragelemente 27 bilden bei der Bogenführung 22, 23 gewissermaßen die Sehne eines Kreises. Die Bogenführung 22, 23 weist jeweils nur noch eine obere und eine untere Bogenbahn auf. Etwaige obere und untere Ausweichbahnen sind dabei entfallen.

Als Verbindungsmittel zwischen dem jeweiligen Tragelement 27 und den Behältnisträgern 11 dienen Bolzen mit relativ großen endseitigen Köpfen einerseits und Schlitze andererseits, in die die Tragelemente mit den Bolzen einfahren können, wobei deren Köpfe beidseitig der Schlitze die Behältnisträger hintergreifen können.

## Patentansprüche

1. Vorrichtung zum Transport von Behältnissen zu mindestens einer Bearbeitungsstation, insbesondere einer Füll- und/oder Verschließstation, mit mehreren die Behältnisse aufnehmenden Behältnisträgern (11) und mit zwei parallelen, in Querrichtung mit Abstand voneinander verlaufenden, dem Vorlauf und dem Rücklauf der Behältnisträger (11) dienenden Führungen (14, 15), die an ihren Enden dem Wechsel der Behältnisträger (11) von einer Führung (14, 15) in die andere Führung (14, 15) dienende Wechseleinrichtungen (18, 19) aufweisen, wobei die Wechseleinrichtungen (18, 19) jeweils Bogenführungen (22, 23) aufweisen, die sich an die beiden Führungen (14, 15) anschließen und im Bogen von einer Führung (14, 15) zur anderen Führung (14, 15) überleiten,
**dadurch gekennzeichnet,**
**dass** jede Führung (14, 15) eine obere Führungsbahn (44, 55) und in vertikalem Abstand unterhalb dieser eine zur oberen Führungsbahn (44, 55) parallele untere Führungsbahn (45, 46) aufweist,
**dass** jeder Behältnisträger (11) ein Tragelement (27) aufweist, wobei das Tragelement (27) ein oberseitiges und ein unterseitiges Führungselement (57, 59) aufweist, die an den oberen Führungsbahnen (44, 55) bzw. an den unteren Führungsbahnen (45, 56) angreifen und längs diesen geführt sein können, so dass die Behältnisträger (11) mittels der Tragelemente (27) zwischen einer oberen Führungsbahn (44, 55) und einer zugeordneten unteren Führungsbahn (45, 56) einer jeweiligen Führung (14, 15) gehalten und beim Transport geführt sind,
und **dass** zum Transport der Behältnisträger (11) zwischen den Führungen (14, 15) angeordnete und an den Behältnisträgern (11) angreifende Triebräder (20, 21, 38, 39) vorgesehen sind.

2. Vorrichtung nach Anspruch 1,
**dadurch gekennzeichnet ,**
**dass** die Behältnisträger (11) auf einer zur Führung (14, 15) hin weisenden Rückseite (26) die Tragelemente (27) aufweisen, an denen sie lösbar gehalten sind.

3. Vorrichtung nach Anspruch 1,
**dadurch gekennzeichnet,**
**dass** sich an die Enden beider oberer Führungsbahnen (44, 45) eine obere Bogenbahn (46) und an die Enden beider unterer Führungsbahnen (45, 56) eine untere Bogenbahn (47) anschließt, die sich jeweils etwa über 180°-Umfangswinkel erstrecken und zur 180°-Bogenführung eines an der oberen Führungsbahn (44, 55) und an der unteren Führungsbahn (45, 56) angreifenden Teils (57 bis 60) eines jeweiligen Tragelements (27) ausgebildet sind.

4. Vorrichtung nach Anspruch 3,
**dadurch gekennzeichnet ,**
**dass** die obere Bogenbahn (46) und/oder die obere Führungsbahn (44, 55) eine Stützfläche (48) aufweist, auf der die Behältnisträger (11) oder die Tragelemente (27) in vertikaler Richtung abstützbar sind oder in Bezug auf diese mit vertikalem Abstand verlaufen.

5. Vorrichtung nach einem der Ansprüche 3 oder 4,
**dadurch gekennzeichnet,**
**dass** die obere sowie die untere Bogenbahn (46, 47) zumindest annähernd kreisabschnittförmig ausgebildet sind und die Kreismitten dieser vertikal etwa in einer Flucht verlaufen.

6. Vorrichtung nach einem der Ansprüche 3 bis 5,
**dadurch gekennzeichnet ,**
**dass** die Triebräder (20, 21, 38, 39) etwa auf der Höhe oder unterhalb der unteren Führungsbahnen (45, 56) und der an diese anschließenden unteren Bogenbahnen (47) oder zwischen den oberen und den unteren Führungsbahnen (44, 55, 45, 56) und Bogenbahnen (46, 47) oder oberhalb der oberen Führungsbahnen (44, 55) angeordnet sind.

7. Vorrichtung nach einem der Ansprüche 1 bis 6,
**dadurch gekennzeichnet ,**
**dass** jedes Triebrad (20, 21, 38, 39) mit einem Segment in die Führung (14) des Vorlaufs und mit einem anderen, insbesondere diametral gegenüberliegenden, Segment in die Führung (15) des Rücklaufs eingreift.

8. Vorrichtung nach einem der Ansprüche 3 bis 7,
**dadurch gekennzeichnet,**
**dass** entlang der jeweiligen Führung (14, 15, 22, 23) mehrere Triebräder (20, 21, 38, 39) angeordnet sind und diese vorzugsweise als Zahnräder ausgebildet sind, wobei auch im Bereich jeder endseitigen Bogenbahn (45, 47) jeweils ein Triebrad (38, 39) angeordnet sein kann und dabei die Drehachse des Triebrades (38, 39) zumindest annähernd mit den Kreismitten der oberen und unteren Bogenbahn (46,47) vertikal fluchten oder in Abstand davon verlaufen kann.

9. Vorrichtung nach einem der Ansprüche 3 bis 8,
**dadurch gekennzeichnet,**
**dass** die untere Bogenbahn (47) eine hinsichtlich der Profiltiefe zuunterst verlaufende Führungsbahn (77) etwa gleichbleibender Profilbreite und oberhalb dieser auf einer Innenseite sowie auf einer dazu etwa diametralen Außenseite jeweils eine untere Ausweichbahn (68, 69) aufweist, von denen eine quer zur Führungsbahn (77) nach innen und die andere nach außen weg gerichtet ist.

10. Vorrichtung nach einem Ansprüche 3 bis 9,
**dadurch gekennzeichnet,**
**dass** die obere Bogenbahn (46) eine hinsichtlich der Profiltiefe zuoberst verlaufende Führungsbahn (78) etwa gleichbleibender Profilbreite und unterhalb dieser auf einer Außenseite sowie einer dazu etwa diametralen Innenseite jeweils eine obere Ausweichbahn (70, 71) aufweist, von denen eine quer zur Führungsbahn (78) nach außen und die andere nach innen weg gerichtet ist.

11. Vorrichtung nach Anspruch 9 oder 10,
**dadurch gekennzeichnet,**
**dass** die jeweilige Ausweichbahn (68 bis 71) in die Führungsbahn (77, 78) ausläuft.

12. Vorrichtung nach einem der Ansprüche 1 bis 11,
**dadurch gekennzeichnet,**
**dass** jedes Tragelement (27) zwei oberseitige und zwei unterseitige Führungselemente (57 bis 60) aufweist, die je Seite in Längsabstand voneinander angeordnet sind, und vorzugsweise, dass die Führungselemente (57 bis 60) als Gleitkörper, z. B. Gleitstifte, oder als Rollkörper, insbesondere als Rollen, ausgebildet sind.

13. Vorrichtung nach Anspruch 12,
**dadurch gekennzeichnet,**
**dass** beim Durchlaufen der Bogenbahn (47) ein unterseitiges Führungselement (59) im Bereich der unteren Bogenbahn (47) entlang deren zuunterst verlaufender Führungsbahn (77) und das andere unterseitige Führungselement (60) entlang der Führungsbahn (77) und den unteren Ausweichbahnen (68, 69) geführt ist oder beide unterseitige Führungselemente (59, 60) entlang der gleichen unteren Bogenbahn geführt sind.

14. Vorrichtung nach einem der Ansprüche 12 oder 13,
**dadurch gekennzeichnet,**
**dass** beim Durchlaufen der Bogenbahn (46) ein oberseitiges Führungselement (58) im Bereich der oberen Bogenbahn (46) entlang deren zuoberst verlaufender Führungsbahn (78) und das andere oberseitige Führungselement (57) entlang der Führungsbahn (78) und den oberen Ausweichbahnen (70, 71) geführt ist oder beide oberseitige Führungselemente (57, 58) entlang der gleichen oberen Bogenbahn geführt sind.

15. Vorrichtung nach einem der Ansprüche 1 bis 14,
**dadurch gekennzeichnet,**
**dass** die Führungselemente (57 bis 60) Bolzen (61, 62), z.B. Lagerachsen oder Wellen, aufweisen, die das jeweilige Tragelement (27) in vertikaler Richtung durchsetzen und oberseitig bzw. unterseitig dieses überstehen.

16. Vorrichtung nach einem der Ansprüche 12 bis 15,
**dadurch gekennzeichnet,**
**dass** je Tragelement (27) ein oberseitiges Führungselement (58) weiter nach oben übersteht als das andere (57) bzw. ein unterseitiges Führungselement (59) weiter nach unten übersteht als das andere (60).

17. Vorrichtung nach einem der Ansprüche 1 bis 16,
**dadurch gekennzeichnet ,**
**dass** die Behältnisträger (11), insbesondere deren Tragelemente (27), in Längsrichtung in gleich großen Abständen folgende Mitnehmer (40), insbesondere Zylinderstifte, aufweisen, mit denen die Triebräder (20, 21, 38, 39) in Eingriff gelangen.

18. Vorrichtung nach einem der Ansprüche 1 bis 17,
**dadurch gekennzeichnet,**
**dass** jeder Behältnisträger (11) ein rückseitiges Verbindungsmittel (28, 30) aufweist, das mit einem zugeordneten Verbindungsmittel (29, 31) des Tragelements (27) für eine lösbare Verbindung zusammenwirken kann, und vorzugsweise, dass das Verbindungsmittel jedes Behältnisträgers (11) und jedes zugeordneten Tragelements (27) Leisten (28, 29) oder Bolzen sowie Nuten (30, 31) zum Einschieben und Aufnehmen der Leisten (28, 29) oder Bolzen aufweist.

19. Vorrichtung nach Anspruch 18,
**gekennzeichnet durch**
eine in vertikaler Richtung wirkende Schiebeverbindung zwischen jedem Behältnisträger (11) und zugeordneten Tragelement (27).

20. Vorrichtung nach einem der Ansprüche 17 bis 19,
**dadurch gekennzeichnet,**
**dass** der die Mitnehmer (40) tragende untere Teil (32) aus einer Platte (33) gebildet ist und dass die Platte (33) in Abstand unterhalb eines oberen Elementteils (34) des jeweiligen Tragelements (27) unter Belassung eines Zwischenraumes (35) zwischen diesen gehalten ist, in dem die jeweilige untere Führungsbahn (45, 56) und die untere Bogenbahn (47) verlaufen oder eine horizontale Scheibe mit ihrem Rand eingreift.

21. Vorrichtung nach Anspruch 20,
**dadurch gekennzeichnet,**
**dass** die Platte (33) mit dem oberen Elementteil (34) mittels mindestens einer Säule (36 37), vorzugsweise mittels zwei beabstandeten Säulen, fest verbunden ist.

22. Vorrichtung nach einem der Ansprüche 1 bis 21,
**dadurch gekennzeichnet,**
**dass** jeder Behältnisträger (11) eine obere Kopfleiste aufweist, die mit zur Seite offenen Aufnahmen für Bereiche aufzunehmender Behältnisse versehen ist.

23. Vorrichtung nach einem der Ansprüche 1 bis 22,
**dadurch gekennzeichnet ,**
**dass** die obere und die untere Führungsbahn (44, 55, 45, 56) je Führung (14, 15) an einer beide Führungsbahnen (44, 55, 46, 56) tragenden Führungsschiene oder an einer jeweiligen oberen bzw. unteren Führungsschiene (64, 75, 65, 76) ausgebildet sind und/oder dass die obere und untere Bogenbahn (46, 47) an einer beide Bogenbahnen (46, 47) tragenden Bogenschiene oder an einer jeweiligen oberen bzw. unteren Bogenschiene (66, 67) ausgebildet sind.

24. Vorrichtung nach Anspruch 23,
**dadurch gekennzeichnet ,**
**dass** die jeweiligen Führungsschienen (64, 75, 65, 76) und/oder Bogenschienen (66, 67) zumindest bereichsweise äußere und/oder innere Führungsbahnen für die Führungselemente (57 bis 60) aufweisen und vorzugsweise im Querschnitt vieleckig, z.B. viereckig, oder gekrümmt, z.B. kreisförmig, ausgebildet sein können.

25. Vorrichtung nach Anspruch 24,
**dadurch gekennzeichnet,**
**dass** als Führungselemente (57 bis 60) zwei Rollen an zwei einander gegenüberliegenden Außenflächen der Führungsschienen (64, 75, 65, 76) und/oder Bogenschienen (66, 67) geführt sind.

26. Vorrichtung nach Anspruch 25,
**dadurch gekennzeichnet ,**
**dass** die Rollen zur vertikalen Abstützung der Behältnisträger (11) ausgebildet sind.

27. Vorrichtung nach einem der Ansprüche 1 bis 26,
**dadurch gekennzeichnet ,**
**dass** die obere und/oder die untere Führungsbahn (44, 55, 45, 56) jeweils an zwei etwa parallel zueinander verlaufenden Längsschienen (64, 75, 65, 76) ausgebildet sind und/oder die obere und/oder die untere Bogenbahn (46, 47) jeweils an zwei etwa parallel zueinander verlaufenden Bogenschienen (66, 67) ausgebildet sind.

28. Vorrichtung nach einem der Ansprüche 23 bis 27,
**dadurch gekennzeichnet,**
**dass** die obere und die untere Führungsschiene (64, 75, 65, 76) jeweils ein U-Profil aufweist und dass beide Führungsschienen (64, 75, 65, 76) mit den U-Öffnungen einander zugewandt sind, oder dass die obere und/oder die untere Führungsschiene als Führungsstange mit Rundquerschnitt oder Vieleckquerschnitt ausgebildet ist, auf denen die Tragelemente (27) geführt sind.

29. Vorrichtung nach einem der Ansprüche 23 bis 28,
**dadurch gekennzeichnet,**
**dass** jede Bogenschiene (66, 67) zumindest bereichsweise ein offenes U-Profil aufweist, das sich in Transportrichtung der Behältnisträger (12) an das jeweilige längsverlaufende U-Profil der Führungsschiene (64, 75, 65, 76) anschließt.

30. Vorrichtung nach Anspruch 29,
**dadurch gekennzeichnet,**
**dass** die obere Bogenschiene (66) und die untere Bogenschiene (67) in Bezug zueinander derart um 180° gewendet sind, dass die U-Profile beider Bogenschienen (66, 67) mit ihrer U-Öffnung einander zugewandt sind, und dass bei der unteren Bogenschiene (67) die innere Ausweichbahn (68) beim Einlauf in die Bogenbahn (47) und die äußere Ausweichbahn (69) beim Auslauf aus der Bogenbahn (47) vorgesehen ist, während bei der oberen Bogenschiene (66) die Verhältnisse derart vertauscht sind, dass die äußere Ausweichbahn (70) beim Einlauf in die Bogenbahn (46) und die innere Ausweichbahn (71) beim Auslauf aus der Bogenbahn (46) vorgesehen ist.

## Claims

1. Apparatus for transporting containers to at least one processing station, in particular to a filling and/or closing station, having a plurality of container-receiving container carriers (11), and having two parallel, transversely spaced-apart guides (14, 15), which serve for the advancement and the return of the container carriers (11) and, at their ends, have changeover devices (18, 19) which serve for the changeover of the container carriers (11) from one guide (14, 15) into the other guide (14, 15), wherein the changeover devices (18, 19) each have arcuate guides (22, 23), which adjoin the two guides (14, 15) and lead in arcuate fashion from one guide (14, 15) to the other guide (14, 15),
**characterized in that**
each guide (14, 15) has an upper guide path (44, 55) and, at a vertical distance beneath this, a lower guide path (45, 56), which is parallel to the upper guide path (44, 55), **in that** each container carrier (11) has a carrying element (27), wherein the carrying element (27) has a guide element (57, 59) on the upper side and on the underside, it being possible for these guide elements to act on the upper guide paths (44, 55) and on the lower guide paths (45, 46), respectively, and be guided along the same, and therefore the container carriers (11), by means of the carrying elements (27), are retained, and guided during transportation, between an upper guide path (44, 45) and an associated lower guide path (45, 56) of a respective guide (14, 15), and **in that** drive wheels (20, 21, 38, 39) are provided for the purpose of transporting the container carriers (11), these drive wheels being arranged between the guides (14, 15) and acting on the container carriers (11).

2. Apparatus according to Claim 1, **characterized in that** the container carriers (11) have on a rear side (26), which is oriented in the direction of the guide (14, 15), the carrying elements (27), on which they are retained in a releasable manner.

3. Apparatus according to Claim 1, **characterized in that** the ends of the two upper guide paths (44, 55) are adjoined by an upper arcuate path (46), and the ends of the two lower guide paths (45, 56) are adjoined by a lower arcuate path (47), and these arcuate paths extend in each case approximately over a circumferential angle of 180° and are designed for guiding over an arcuate path of 180° a part (57 to 60) of a respective carrying element (27) which acts on the upper guide path (44, 55) and on the lower guide path (45, 56).

4. Apparatus according to Claim 3, **characterized in that** the upper arcuate path (46) and/or the upper guide path (44, 55) have/has a supporting surface (48), on which the container carriers (11) or the carrying elements (27) can be supported in the vertical direction or from which these are spaced apart vertically.

5. Apparatus according to either of Claims 3 and 4, **characterized in that** the upper and the lower arcuate paths (46, 47) are designed at least more or less in the form of part of a circle, and the centres of the circles thereof are approximately aligned in the vertical direction.

6. Apparatus according to one of Claims 3 to 5, **characterized in that** the drive wheels (20, 21, 38, 39) are arranged approximately level with, or beneath, the lower guide paths (45, 56) and the arcuate paths (47), which adjoin these lower guide paths, or between the upper and the lower guide paths (44, 55, 45, 56) and arcuate paths (46, 47) or above the upper guide paths (44, 55).

7. Apparatus according to one of Claims 1 to 6, **characterized in that** each drive wheel (20, 21, 38, 39) has one segment engaging in the guide (14) of the advancement section and has another segment, in particular one located diametrically opposite the first, engaging in the guide (15) of the return section.

8. Apparatus according to one of Claims 3 to 7, **characterized in that** a plurality of drive wheels (20, 21, 38, 39) are arranged along the respective guide (14, 15, 22, 23), and these drive wheels are designed preferably as gearwheels, wherein it is also possible for a respective drive wheel (38, 39) to be arranged in the region of each end-side arcuate path (45, 47) and for the axis of rotation of the drive wheel (38, 39) to be vertically aligned at least more or less with the centres of the circles of the upper and lower arcuate path (46, 47) or to be spaced apart therefrom.

9. Apparatus according to one of Claims 3 to 8, **characterized in that** the lower arcuate path (47) has a guide path (77), which is of approximately constant profile width and, in respect of the profile depth, runs at the very bottom, and, above this guide path on an inner side and on an outer side approximately diametrical thereto, has a respective lower escape path (68, 69), one escape path being directed inwards, transversely to the guide path (77), and the other being directed away outwards.

10. Apparatus according to one of Claims 3 to 9, **characterized in that** the upper arcuate path (46) has a guide path (78), which is of approximately constant profile width and, in respect of the profile depth, runs right at the top, and, beneath this guide path, on an outer side and an inner side approximately diametrical thereto, has a respective upper escape path (70, 71), one escape path being directed outwards, transversely to the guide path (78), and the other being directed away inwards.

11. Apparatus according to Claim 9 or 10, **characterized in that** the respective escape path (68 to 71) runs out into the guide path (77, 78).

12. Apparatus according to one of Claims 1 to 11, **characterized in that** each carrying element (27) has two guide elements (57, 58) on the upper side and two guide elements (59, 60) on the underside, the guide elements on each side being spaced apart longitudinally from one another, and preferably **in that** the guide elements (57 to 60) are designed as sliding bodies, e.g. sliding pins, or as rolling bodies, in particular as rollers.

13. Apparatus according to Claim 12, **characterized in that**, upon passage through the arcuate path (47), one guide element (59) on the underside is guided, in the region of the lower arcuate path (47), along the guide path (77) running at the bottom thereof, and the other guide element (60) on the underside is guided along the guide path (77) and the lower escape paths (68, 69), or the two guide elements (59, 60) on the underside are guided along the same lower arcuate path.

14. Apparatus according to either of Claims 12 and 13, **characterized in that**, upon passage through the arcuate path (46), one guide element (58) on the upper side is guided, in the region of the upper arcuate path (46), along the guide path (78) running at the top thereof, and the other guide element (57) on the upper side is guided along the guide path (78) and the upper escape paths (70, 71), or the two guide elements (57, 58) on the upper side are guided along the same upper arcuate path.

15. Apparatus according to one of Claims 1 to 14, **characterized in that** the guide elements (57 to 60) have bolts (61, 62), e.g. bearing pins or shafts, which pass through the respective carrying element (27) in the vertical direction and project beyond the same on the upper side and/or underside.

16. Apparatus according to one of Claims 12 to 15, **characterized in that**, on each carrying element (27), one guide element (58) on the upper side projects further upwards than the other (57) and one guide element (59) on the underside projects further downwards than the other (60).

17. Apparatus according to one of Claims 1 to 16, **characterized in that** the container carriers (11), in particular the carrying elements (27) thereof, have drivers (40), in particular cylinder pins, which follow at equal intervals in the longitudinal direction and with which the drive wheels (20, 21, 38, 39) come into engagement.

18. Apparatus according to one of Claims 1 to 17, **characterized in that** each container carrier (11) has a connecting means (28, 30) on the rear side, which can interact with an associated connecting means (29, 31) of the carrying element (27) for a releasable connection, and preferably **in that** the connecting means of each container carrier (11) and of each associated carrying element (27) has strips (28, 29) or bolts and also grooves (30, 31), into which the strips (28, 29) or bolts can be pushed and held therein.

19. Apparatus according to Claim 18, **characterized by** a vertically acting sliding connection between each container carrier (11) and associated carrying element (27).

20. Apparatus according to one of Claims 17 to 19, **characterized in that** the lower part (32), which carries the drivers (40), is formed from a plate (33), and **in that** the plate (33) is retained at a distance beneath an upper part (34) of the respective carrying element (27), leaving between the same an interspace (35) in which the respective lower guide path (45, 56) and the lower arcuate path (47) run or a horizontal disc engages by way of it periphery.

21. Apparatus according to Claim 20, **characterized in that** the plate (33) is fixed to the upper element part (34) by means of at least one column (36, 37), preferably by means of two spaced-apart columns.

22. Apparatus according to one of Claims 1 to 21, **characterized in that** each container carrier (11) has an upper head strip which is provided with holders which are open to the side and are intended for regions of containers which are to be received.

23. Apparatus according to one of Claims 1 to 22, **characterized in that** the upper and the lower guide paths (44, 55, 45, 56), for each guide (14, 15), are formed on a guide rail which carries the two guide paths (44, 55, 46, 56), or on a respective upper guide rail and lower guide rail (64, 75, 65, 76), and/or **in that** the upper and lower arcuate paths (46, 47) are formed on an arcuate rail which carries the two arcuate paths (46, 47), or on a respective upper arcuate rail and lower arcuate rail (66, 67).

24. Apparatus according to Claim 23, **characterized in that** the respective guide rails (64, 75, 65, 76) and/or arcuate rails (66, 67), at least in certain regions, have outer and/or inner guide paths for the guide elements (57 to 60) and may preferably be of cross-sectionally polygonal, e.g. quadrilateral, or curved, e.g. circular, design.

25. Apparatus according to Claim 24, **characterized in that**, as guide elements (57 to 60), two rollers are guided on two mutually opposite outer surfaces of the guide rails (64, 75, 65, 76) and/or arcuate rails (66, 67).

26. Apparatus according to Claim 25, **characterized in that** the rollers are designed for supporting the container carriers (11) vertically.

27. Apparatus according to one of Claims 1 to 26, **characterized in that** the upper and/or the lower guide paths (44, 55, 45, 56) are formed in each case on two approximately parallel longitudinal rails (64, 75, 65, 76), and/or the upper and/or the lower arcuate paths (46, 47) are formed in each case on two approximately parallel arcuate rails (66, 67).

28. Apparatus according to one of Claims 23 to 27, **characterized in that** the upper and the lower guide rails (64, 75, 65, 76) each have a U-shaped profile, and **in that** the two guide rails (64, 75, 65, 76) are directed towards one another by way of the U openings, or **in that** the upper guide rail and/or the lower guide rail are/is designed as the guide rod with a round cross section or polygonal cross section, the carrying elements (27) being guided thereon.

29. Apparatus according to one of Claims 23 to 28, **characterized in that** each arcuate rail (66, 67), at least in certain regions, has an open U-shaped profile which, as seen in the transporting direction of the container carriers (11), adjoins the respective longitudinally running U-shaped profile of the guide rail (64, 75, 65, 76).

30. Apparatus according to Claim 29, **characterized in that** the upper arcuate rail (66) and the lower arcuate rail (67) are turned through 180° in relation to one another such that the U-shaped profiles of the two arcuate rails (66, 67) are directed towards one another by way of their U opening, and **in that**, in the case of the lower arcuate rail (67), the inner escape path (68) is provided at the entrance into the arcuate path (47) and the outer escape path (69) is provided at the exit from the arcuate path (47), whereas, in the case of the upper arcuate rail (66), the conditions are swapped round such that the outer escape path (70) is provided at the entrance into the arcuate path (46) and the inner escape path (71) is provided at the exit from the arcuate path (46).

## Revendications

1. Dispositif pour le transport de récipients vers au moins un poste de traitement, en particulier un poste de remplissage et/ou de fermeture, comprenant plusieurs supports de récipients (11) recevant les récipients et deux guides (14, 15) parallèles, s'étendant dans la direction transversale à distance l'un de l'autre, servant à faire avancer et revenir les supports de récipients (11), qui présentent à leurs extrémités des dispositifs de transfert (18, 19) servant au transfert des supports de récipients (11) d'un guide (14, 15) dans l'autre guide (14, 15), les dispositifs de transfert (18, 19) présentant à chaque fois des guides courbes (22, 23) qui se raccordent aux deux guides (14, 15) et qui conduisent sous forme courbe d'un guide (14, 15) à l'autre guide (14, 15),
**caractérisé en ce que**
chaque guide (14, 15) présente une piste de guidage supérieure (44, 55), et à distance verticale en dessous de celle-ci, une piste de guidage inférieure (45, 56) parallèle à la piste de guidage supérieure (44, 55),
chaque support de récipients (11) présente un élément de support (27), l'élément de support (27) présentant un élément de guidage du côté supérieur et un élément de guidage du côté inférieur (57, 59), qui viennent en prise sur les pistes de guidage supérieures (44, 55) ou sur les pistes de guidage inférieures (45, 56) et qui peuvent être guidés le long de celles-ci, de sorte que les supports de récipients (11) soient maintenus et soient guidés lors du transport au moyen des éléments de support (27) entre une piste de guidage supérieure (44, 55) et une piste de guidage inférieure associée (45, 56) d'un guide respectif (14, 15),
et **en ce que** l'on prévoit, pour le transport des supports de récipients (11), des roues d'entraînement (20, 21, 38, 39) disposées entre les guides (14, 15) et venant en prise sur les supports de récipients (11).

2. Dispositif selon la revendication 1,
**caractérisé en ce que**
les supports de récipients (11) présentent sur un côté arrière (26) tourné vers le guide (14, 15), les éléments de support (27) sur lesquels ils sont maintenus de manière amovible.

3. Dispositif selon la revendication 1,
**caractérisé en ce**
**qu'**aux extrémités des deux pistes de guidage supérieures (44, 55) se raccorde une piste courbe supérieure (46) et aux extrémités des deux pistes de guidage inférieures (45, 56) se raccorde une piste courbe inférieure (47), lesquelles s'étendent à chaque fois sur un angle périphérique d'environ 180° et qui sont réalisées pour le guidage suivant une courbe de 180° d'une partie (57 à 60) d'un élément de support respectif (27) venant en prise sur la piste de guidage supérieure (44, 55) et sur la piste de guidage inférieure (45, 56).

4. Dispositif selon la revendication 3,
**caractérisé en ce que**
la piste courbe supérieure (46) et/ou la piste de guidage supérieure (44, 55) présentent une surface de support (48) sur laquelle peuvent s'appuyer les supports de récipients (11) ou les éléments de support (27) dans la direction verticale ou ces derniers s'étendant par rapport à celle-ci à une distance verticale.

5. Dispositif selon l'une quelconque des revendications 3 ou 4,
**caractérisé en ce que**
la piste courbe supérieure et la piste courbe inférieure (46, 47) sont réalisées au moins approximativement sous forme de portions de cercle et les centres des cercles de celles-ci s'étendent verticalement approximativement en alignement.

6. Dispositif selon l'une quelconque des revendications 3 à 5,
**caractérisé en ce que**
les roues d'entraînement (20, 21, 38, 39) sont disposées approximativement à la hauteur ou en dessous des pistes de guidage inférieures (45 ,56) et des pistes courbes inférieures (47) se raccordant à celles-ci, ou entre les pistes de guidage supérieures et inférieures (44, 55, 45, 56) et les pistes courbes (46, 47) ou au-dessus des pistes de guidage supérieures (44, 55).

7. Dispositif selon l'une quelconque des revendications 1 à 6,
**caractérisé en ce que**
chaque roue d'entraînement (20, 21, 38, 39) vient en prise avec un segment dans le guide (14) pour l'avance et avec un autre segment, notamment diamétralement opposé, dans le guide (15) pour le retour.

8. Dispositif selon l'une quelconque des revendications 3 à 7,
**caractérisé en ce que**
le long du guide respectif (14, 15, 22, 23), sont disposées plusieurs roues d'entraînement (20, 21, 38, 39) et celles-ci sont réalisées de préférence sous forme de roues dentées, une roue d'entraînement (38, 39) pouvant aussi à chaque fois être disposée dans la région de chaque piste courbe du côté de l'extrémité (45, 47), et en l'occurrence l'axe de rotation de la roue d'entraînement (38, 39) pouvant être aligné verticalement au moins approximativement avec les centres de la piste courbe supérieure et de la piste courbe inférieure (46, 47) ou s'étendre à distance de ceux-ci.

9. Dispositif selon l'une quelconque des revendications 3 à 8,
**caractérisé en ce que**
la piste courbe inférieure (47) présente une piste de guidage (77) s'étendant le plus bas par rapport à la profondeur de profilé, ayant une largeur de profilé approximativement uniforme et au-dessus de celle-ci d'un côté intérieur ainsi que d'un côté extérieur approximativement diamétralement opposé à celui-ci, une piste d'écartement (68, 69) inférieure respective, dont l'une est orientée transversalement à la piste de guidage (77) vers l'intérieur et l'autre est orientée vers l'extérieur.

10. Dispositif selon l'une quelconque des revendications 3 à 9,
**caractérisé en ce que**
la piste courbe supérieure (46) présente une piste de guidage (78) s'étendant le plus haut par rapport à la profondeur de profilé, ayant une largeur de profilé approximativement uniforme et en dessous de celle-ci d'un côté extérieur ainsi que d'un côté intérieur approximativement diamétralement opposé à celui-ci, une piste d'écartement (70, 71) supérieure respective, dont l'une est orientée transversalement à la piste de guidage (78) vers l'extérieur et l'autre est orientée vers l'intérieur.

11. Dispositif selon la revendication 9 ou 10,
**caractérisé en ce que**
la piste d'écartement respective (68 à 71) se termine par la piste de guidage (77, 78).

12. Dispositif selon l'une quelconque des revendications 1 à 11,
**caractérisé en ce que**
chaque élément de support (27) présente deux éléments de guidage du côté supérieur et deux du côté inférieur (57 à 60), qui sont disposés de chaque côté à distance longitudinale l'un de l'autre, et de préférence **en ce que** les éléments de guidage (57 à 60) sont réalisés sous forme de corps de glissement, par exemple de goupilles de glissement, ou sous forme de corps de roulement, notamment sous forme de rouleaux.

13. Dispositif selon la revendication 12,
**caractérisé en ce que**
lors du passage sur la piste courbe (47), un élément de guidage du côté inférieur (59) est guidé dans la région de la piste courbe inférieure (47) le long de sa piste de guidage (77) s'étendant le plus bas, et l'autre élément de guidage du côté inférieur (60) est guidé le long de la piste de guidage (77) et des pistes d'écartement inférieures (68, 69) ou les deux éléments de guidage (59, 60) du côté inférieur sont guidés le long de la même piste courbe inférieure.

14. Dispositif selon l'une quelconque des revendications 12 ou 13,
**caractérisé en ce que**
lors du passage sur la piste courbe (46), un élément de guidage du côté supérieur (58) est guidé dans la région de la piste courbe supérieure (46) le long de sa piste de guidage (78) s'étendant le plus haut, et l'autre élément de guidage du côté supérieur (57) est guidé le long de la piste de guidage (78) et des pistes d'écartement supérieures (70, 71) ou les deux éléments de guidage (57, 58) du côté supérieur sont guidés le long de la même piste courbe supérieure.

15. Dispositif selon l'une quelconque des revendications 1 à 14,
**caractérisé en ce que**
les éléments de guidage (57 à 60) présentent des boulons (61, 62), par exemple des axes de palier ou des arbres, qui traversent l'élément de support respectif (27) dans la direction verticale et qui dépassent de celui-ci du côté supérieur, respectivement inférieur.

16. Dispositif selon l'une quelconque des revendications 12 à 15,
**caractérisé en ce que**
chaque élément de support (27) dépasse d'un élément de guidage du côté supérieur (58) davantage vers le haut que l'autre (57), ou dépasse d'un élément de guidage du côté inférieur (59) plus que l'autre (60) vers le bas.

17. Dispositif selon l'une quelconque des revendications 1 à 16,
**caractérisé en ce que**
les supports de récipients (11), en particulier leurs éléments de support (27), présentent, dans la direction longitudinale, des dispositifs d'entraînement (40) se suivant à intervalles réguliers, notamment des goupilles cylindriques, avec lesquelles les roues d'entraînement (20, 21, 38, 39) viennent en prise.

18. Dispositif selon l'une quelconque des revendications 1 à 17,
**caractérisé en ce que**
chaque support de récipients (11) présente un moyen de connexion du côté arrière (28, 30), qui peut coopérer avec un moyen de connexion associé (29, 31) de l'élément de support (27) pour réaliser une connexion amovible, et de préférence, **en ce que** le moyen de connexion de chaque support de récipients (11) et de chaque élément de support associé (27) présente des nervures (28, 29) ou des boulons ainsi que des rainures (30, 31) pour l'insertion et la réception des nervures (28, 29) ou des boulons.

19. Dispositif selon la revendication 18,
**caractérisé par**
une connexion coulissante effective dans la direction verticale, entre chaque support de récipients (11) et élément de support associé (27).

20. Dispositif selon l'une quelconque des revendications 17 à 19,
**caractérisé en ce que**
la partie inférieure (32) portant les dispositifs d'entraînement (40) est formée d'une plaque (33) et **en ce que** la plaque (33) est maintenue à distance en dessous d'une partie d'élément supérieure (34) de l'élément de support respectif (27) en laissant libre un espace intermédiaire (35) entre celles-ci, dans lequel s'étendent la piste de guidage inférieure respective (45, 56) et la piste courbe inférieure (47) ou dans lequel vient en prise un disque horizontal par son bord.

21. Dispositif selon la revendication 20,
**caractérisé en ce que**
la plaque (33) est connectée fixement à la partie d'élément supérieure (34) au moyen d'au moins une colonnette (36, 37), de préférence au moyen de deux colonnettes espacées.

22. Dispositif selon l'une quelconque des revendications 1 à 21,
**caractérisé en ce que**
chaque support de récipients (11) présente une nervure de tête qui est pourvue de logements ouverts sur le côté pour des régions de récipients à recevoir.

23. Dispositif selon l'une quelconque des revendications 1 à 22,
**caractérisé en ce que**
la piste de guidage supérieure et la piste de guidage inférieure (44, 55, 45, 56) de chaque guide (14, 15) sont réalisées sur un rail de guidage portant les deux pistes de guidage (44, 55, 46, 56) ou sur un rail de guidage respectif supérieur ou inférieur (64, 75, 65, 76), et/ou **en ce que** la piste courbe supérieure et la piste courbe inférieure (46, 47) sont réalisées sur un rail courbe portant les deux pistes courbes (46, 47) ou sur un rail courbe respectif supérieur ou inférieur (66, 67).

24. Dispositif selon la revendication 23,
**caractérisé en ce que**
les rails de guidage respectifs (64, 75, 65, 76) et/ou les rails courbes (66, 67) présentent au moins en partie des pistes de guidage extérieures et/ou intérieures pour les éléments de guidage (57 à 60), et peuvent être réalisés de préférence avec une section transversale polygonale, par exemple carrée, ou courbe, par exemple circulaire.

25. Dispositif selon la revendication 24,
**caractérisé en ce que**
deux rouleaux servant d'éléments de guidage (57 à 60) sont guidés sur deux surfaces extérieures opposées des rails de guidage (64, 75, 65, 76) et/ou des rails courbes (66, 67).

26. Dispositif selon la revendication 25,
**caractérisé en ce que**
les rouleaux sont réalisés en vue d'un support vertical des supports de récipients (11).

27. Dispositif selon l'une quelconque des revendications 1 à 26,
**caractérisé en ce que**
la piste de guidage supérieure et/ou la piste de guidage inférieure (44, 55, 45, 56) sont réalisées à chaque fois sur deux rails longitudinaux (64, 75, 65, 76) s'étendant approximativement parallèlement l'un à l'autre, et/ou la piste courbe supérieure et/ou la piste courbe inférieure (46, 47) sont réalisées à chaque fois sur deux rails courbes (66, 67) s'étendant approximativement parallèlement l'un à l'autre.

28. Dispositif selon l'une quelconque des revendications 23 à 27,
**caractérisé en ce que**
le rail de guidage supérieur et le rail de guidage inférieur (64, 75, 65, 76) présentent à chaque fois un profilé en U et **en ce que** les deux rails de guidage (64, 75, 65, 76) sont tournés l'un vers l'autre avec les ouvertures du U, ou **en ce que** le rail de guidage supérieur et/ou le rail de guidage inférieur sont réalisés sous forme de barre de guidage de section transversale circulaire ou polygonale, sur lesquelles sont guidés les éléments de support (27).

29. Dispositif selon l'une quelconque des revendications 23 à 28,
**caractérisé en ce que**
chaque rail courbe (66, 67) présente au moins en partie un profilé en U ouvert, qui se raccorde dans la direction de transport des supports de récipients (11) au profilé en U respectif s'étendant longitudinalement du rail de guidage (64, 75, 65, 76).

30. Dispositif selon la revendication 29,
**caractérisé en ce que**
le rail courbe supérieur (66) et le rail courbe inférieur (67) sont tournés l'un par rapport à l'autre de 180°, de telle sorte que les profilés en U des deux rails courbes (66, 67) soient tournés l'un vers l'autre avec leur ouverture de U, et **en ce que**, dans le cas du rail courbe inférieur (67), la piste d'écartement intérieure (68) est prévue au niveau de l'entrée dans la piste courbe (47) et la piste d'écartement extérieure (69) est prévue au niveau de la sortie de la piste courbe (47), tandis que dans le cas du rail courbe supérieur (66), les rapports sont intervertis de telle sorte que la piste d'écartement extérieure (70) soit prévue au niveau de l'entrée dans la piste courbe (46) et que la piste d'écartement intérieure (71) soit prévue au niveau de la sortie de la piste courbe (46).
